# EUROPÄISCHE PATENTSCHRIFT

(11) **EP 4 104 966 B1**
(45) Veröffentlichungstag und Bekanntmachung des Hinweises auf die Patenterteilung: **08.10.2025**
(21) Anmeldenummer: 21179190.0
(22) Anmeldetag: 14.06.2021
(51) Int. Cl.: B23Q 1/00

(54) **AUFSPANNVORRICHTUNG**
CLAMPING DEVICE
DISPOSITIF DE SERRAGE

(43) Veröffentlichungstag der Anmeldung: 21.12.2022
(73) Patentinhaber: Hofer Technics AG, 5303 Würenlingen (CH)
(72) Erfinder: HOFER, Guido, 5408 Ennetbaden (CH)
(74) Vertreter: Leinweber & Zimmermann

(56) Entgegenhaltungen:
- EP-B1- 2 774 717
- DE-A1- 4 015 445

## Beschreibung

Die Erfindung betrifft eine Aufspannvorrichtung zum Aufspannen einer Palette auf einer Palettenaufnahme der Aufspannvorrichtung mit einem Aufspannmechanismus, der zur Ausführung einer längs einer Spannachse verlaufenden Spannbewegung eines axialbeweglichen Spannglieds und einer um die Spannachse verlaufenden Drehbewegung eines sich radial erstreckenden Kopplungsbereichs des Aufspannmechanismus ausgebildet ist, wobei die Drehbewegung zum axialfesten Kopplungseingriff des Kopplungsbereichs des Aufspannmechanismus mit einem Kopplungsgegenbereich der Palette und die Spannbewegung zum Aufspannen der angekoppelten Palette auf der Palettenaufnahme dient.

Solche Aufspannvorrichtungen sind aus dem Stand der Technik, beispielsweise aus der EP 2 774 717 B1, bekannt. Die dort offenbarte Aufspannvorrichtung weist als Spannglied eine Zugstange auf, die an ihrem unteren Endbereich mit einem längs der Spannachse beweglichen Kolben einer druckmittelbetriebenen Kolben-Zylinder-Anordnung verbunden ist. Der Kolben wird durch eine Federanordnung in Richtung der Spannbewegung mit einer Federkraft beaufschlagt, welche die zum Aufspannen der Palette erforderliche Spannkraft erzeugt. Zum Lösen der Spannkraft wird Druckluft in einen Raum unter dem Kolben zugeführt. Die Zugstange weist als Kopplungsbereich an ihrem oberen Endbereich mindestens einen Vorsprung auf, der durch eine Drehbewegung der Zugstange in eine formschlüssige Verbindung mit der Palette eintreten kann. Dazu wird die Zugstange mittels einer Zwangsführung, beispielsweise einer S-förmigen Kulissenführung, um ihre Spannachse gedreht und dabei gleichzeitig durch die Federkraft nach unten bewegt. Sobald der Kopplungsbereich der Zugstange mit der Palette in Eingriff steht, wird durch die verbleibende Federkraft der Federanordnung die Palette auf der Palettenaufnahme aufgespannt.

Aufspannsysteme, mit denen eine Palette reproduzierbar, d.h. mit einer maximalen Abweichung von wenigen tausendstel Millimetern aufgespannt werden kann, bezeichnet man als Nullpunktspannsysteme. Die Anforderungen an Nullpunktspannsysteme sind vielfältig. So erfordern sie eine hohe Genauigkeit, Stabilität und Spannkraft, sollen aber gleichzeitig flexibel einsetzbar sein, eine günstige Baumasse aufweisen und kostengünstig herstellbar sein. Außerdem sollen sie eine gute Bedienbarkeit aufweisen. Zur Vereinbarung dieser Zielsetzungen besteht Verbesserungsbedarf der existierenden Aufspannvorrichtungen.

Der Erfindung liegt die Aufgabe zugrunde, eine Aufspannvorrichtung der eingangs genannten Art dahingehend weiterzubilden, dass eine hohe Spannkraft bei gleichzeitig einfachem Aufbau der Aufspannvorrichtung erzielt werden kann.

Erfindungsgemäß wird diese Aufgabe dadurch gelöst, dass der Kopplungsbereich des Aufspannmechanismus an einem an dem Spannglied drehbar und Axialkraft aufnehmend gelagerten Koppelglied ausgebildet ist.

Eine erfindungsgemäße Aufspannvorrichtung ermöglicht das Aufspannen einer sogenannten Palette auf einer Palettenaufnahme der Aufspannvorrichtung. Eine Palette bezeichnet einen Träger, auf dem ein einzuspannendes Werkstück oder Werkzeug für einen Bearbeitungsvorgang festgelegt werden kann. Die Palettenaufnahme dient als Gegenanschlag zum Aufspannen der Palette.

Die Aufspannvorrichtung weist einen Aufspannmechanismus auf. Der Aufspannmechanismus weist ein Spannglied und einen Kopplungsbereich auf. Der Kopplungsbereich des Spannmechanismus ist mit einem Kopplungsgegenbereich der Palette koppelbar.

Das Spannglied ist längs einer Spannachse axialbeweglich. Durch eine Spannbewegung des Spannglieds längs der Spannachse kann zwischen der Palette und der Palettenaufnahme eine Spannkraft zum Aufspannen der mit dem Kopplungsbereich des Aufspannmechanismus gekoppelten Palette erzeugt werden. Das Spannglied kann zwischen einer Spannlage, in der bei angekoppelter Palette eine Spannkraft auf die Palette wirkt, und einer Entspannlage, in der bei angekoppelter Palette keine Spannkraft auf die Palette wirkt, axialbeweglich sein. Die Spannachse kann beispielweise parallel zur Schwererichtung verlaufen, ist aber nicht darauf beschränkt.

Der Kopplungsbereich des Aufspannmechanismus erstreckt sich radial zur Spannachse und ist zum Ausführen einer um die Spannachse verlaufenden Drehbewegung ausgebildet. Der Kopplungsbereich ist also um die Spannachse drehbar. Die Drehbewegung des Kopplungsbereichs dient dem axialfesten Kopplungseingriff des Kopplungsbereichs des Aufspannmechanismus mit dem Kopplungsgegenbereich der Palette.

Bei der erfindungsgemäßen Aufspannvorrichtung ist der Kopplungsbereich des Aufspannmechanismus an einem Koppelglied ausgebildet. Das Koppelglied ist drehbar an dem Spannglied gelagert. Der Aufspannmechanismus weist also einen zweiteiligen Aufbau aus dem Spannglied und dem separaten Koppelglied auf, an dem der Kopplungsbereich ausgebildet ist. Durch eine Drehbewegung des Koppelglieds um das Spannglied in einer Kopplungsrichtung können der Kopplungsbereich des Aufspannmechanismus und der Kopplungsgegenbereich der Palette in einen axialfesten Kopplungseingriff gebracht werden. Durch eine Drehbewegung in eine der Kopplungsrichtung entgegengesetzten Entkopplungsrichtung ist der Kopplungseingriff lösbar.

Weiter ist das Koppelglied Axialkraft aufnehmend an dem Spannglied gelagert. Eine Bewegung des Spannglieds längs der Spannachse bewirkt somit eine Bewegung des Koppelglieds entlang der Spannachse. Das Koppelglied kann axialfest an dem Spannglied gelagert sein. Das Koppelglied kann einen Abschnitt zum axialfesten Kopplungseingriff mit einem Gegenabschnitt des Spannglieds aufweisen. Alternativ kann das Koppelglied mit einem Spiel längs der Spannachse an dem Spannglied gelagert sein.

Um eine Palette auf der Palettenaufnahme der erfindungsgemäßen Aufspannvorrichtung aufzuspannen, wird zuerst der Kopplungsgegenbereich der zugestellten Palette durch eine Drehbewegung des drehbar an dem Spannglied gelagerten Koppelgliedes in der Kopplungsrichtung mit dem Kopplungsbereich des Aufspannmechanismus in einen axialfesten Kopplungseingriff gebracht. Eine Bewegung des Spannglieds ist dazu nicht erforderlich. Dann wird eine Spannbewegung des Spannglieds längs der Spannachse ausgeführt. Da das Koppelglied Axialkraft aufnehmend an dem Spannglied gelagert ist, wird auch das Koppelglied und damit die Palette längs der Spannachse bewegt. Dadurch kann die Palette auf der Palettenaufnahme aufgespannt werden. Es wirkt dann eine Spannkraft zwischen der Palette und der Palettenaufnahme.

Ist die Palette auf der Palettenaufnahme aufgespannt, so führt eine Bewegung des Spannglieds in einer Gegenrichtung der Spannbewegung aufgrund der Axialkraft aufnehmenden Lagerung des Koppelgliedes an dem Spannglied zu einer Entlastung des Koppelglieds und damit auch der Palette. Hat das Spannglied die volle Entspannlage erreicht, ist die Einwirkung der Spannkraft auf die Palette aufgehoben. Dann wird das solchermaßen entlastete Koppelglied in der Entkopplungsrichtung um die Spannachse gedreht, wodurch der Kopplungseingriff des Kopplungsbereichs des Aufspannmechanismus und des Kopplungsgegenbereichs der Palette gelöst wird. Die Palette kann dann von der Aufspannvorrichtung entfernt werden.

Bei der erfindungsgemäßen Aufspannvorrichtung wird der Kopplungseingriff zwischen dem Kopplungsbereich des Aufspannmechanismus und dem Kopplungsgegenbereich der Palette allein durch eine Drehbewegung erzeugt, während die Spannbewegung zum Aufspannen der Palette durch eine separate Axialbewegung des Spannglieds längs der Spannachse erfolgt. Die Drehbewegung zum Erzeugen des Kopplungseingriffs ist somit von der Spannbewegung entkoppelt. Dahingegen muss im Stand der Technik, beispielsweise bei der in der EP 2 774 717 B1 offenbarten Aufspannvorrichtung, die Spannkraft auch die Drehbewegung zum Koppeln des Zugglieds mit der Palette erzeugen.

Bei einer Ausführungsform der Aufspannvorrichtung kann der Aufspannmechanismus eine das Spannglied in Richtung der Spannbewegung mit einer ersten Federkraft beaufschlagende erste Federanordnung und eine erste druckmittelbetriebene Kolben-Zylinder-Anordnung zum Erzeugen einer der ersten Federkraft entgegensetzten Kraft aufweisen. Durch die erste Federkraft kann die Spannbewegung längs der Spannachse bewirkt werden. Die erste Federkraft kann eine Spannkraft erzeugen, mit der die Palette auf der Palettenaufnahme aufgespannt wird. Die erste druckmittelbetriebene Kolben-Zylinder-Anordnung dient dem Erzeugen einer der ersten Federkraft entgegengesetzten Kraft. Ist diese Kraft größer als die erste Federkraft, so kann das Spannglied in einer der Spannbewegung entgegengesetzten Richtung längs der Spannachse bewegt werden. Dadurch kann die auf die Palette wirkende Spannkraft gelöst werden.

Ein Kolben der druckmittelbetriebenen Kolben-Zylinder-Anordnung kann an einem dem Kopplungsbereich des Aufspannmechanismus entgegengesetzten Bereich des Spanngliedes angeordnet sein. Der Kolben kann mit dem Spannglied verbunden sein. Die erste Federanordnung kann an dem Kolben in der Spannrichtung des Spannglieds abgestützt sein.

Die erste Federanordnung kann eine das Spannglied umgebende Tellerfeder aufweisen. Die Tellerfeder kann an dem Kolben in der Spannrichtung abgestützt sein.

In einer Ausführungsform der Erfindung kann das Spannglied einen zylindermantelförmigen Außenbereich aufweisen, der eine Lagerfläche für einen zylindermantelförmigen Innenbereich des Koppelglieds bildet. Die Zylinderachse des zylinderförmigen Außenbereichs kann mit der Spannachse fluchten, so dass das Koppelglied um die Spannachse drehbar an dem Spannglied gelagert ist. Das Spannglied kann einen zylinderförmigen Abschnitt aufweisen, der als Vollzylinder oder als Hohlzylinder ausgebildet sein kann und der den zylinderförmigen Außenbereich aufweist. Das Koppelglied kann einen hülsenförmigen Abschnitt aufweisen. Der zylindermantelförmige Innenbereich des hülsenförmigen Abschnitts kann an dem zylinderförmigen Abschnitt des Spannglieds drehbar gelagert sein.

Der Aufspannmechanismus kann weiter ein in an einem Außenbereich des Koppelglieds angreifendes Stellglied zum Einstellen einer Drehlage des Koppelglieds aufweisen. Das Stellglied kann eine Drehbewegung des Koppelglieds bewirken. Die Drehlage des Koppelglieds kann durch das Stellglied in einer Kopplungslage zum Koppeln des Kopplungsbereichs und des Kopplungsgegenbereichs eingestellt werden. Weiter kann die Drehlage des Koppelglieds in einer Entkoppellage zum Entkoppeln des Kopplungsbereichs und des Kopplungsgegenbereichs eingestellt werden.

Die Drehlage des Koppelglieds kann durch eine Bewegung des Stellglieds entlang einer linearen Bewegungsbahn einstellbar sein. Das Stellglied kann einen Eingriffsbereich aufweisen, der mit einem Eingriffsgegenbereich des Koppelglieds in Eingriff steht. Beispielsweise kann das Stellglied einen bolzenförmigen Abschnitt aufweisen, der entlang der linearen Bewegungsbahn bewegbar ist. Der Eingriffsbereich kann an dem bolzenförmigen Abschnitt ausgebildet sein. Beispielsweise kann der bolzenförmige Abschnitt eine Ausnehmung aufweisen, in die ein an dem Koppelglied ausgebildeter Vorsprung koppelnd eingreift. Alternativ kann der bolzenförmige Abschnitt einen Vorsprung aufweisen, der in eine in dem Koppelglied ausgebildete Ausnehmung koppelnd eingreift.

Der Aufspannmechanismus kann weiter eine das Stellglied entlang der linearen Bewegungsbahn mit einer zweiten Federkraft beaufschlagende zweite Federanordnung und eine zweite druckmittelbetriebene Kolben-Zylinder-Anordnung zum Erzeugen einer der zweiten Federkraft entgegensetzten Kraft aufweisen. Ist die zweite Federkraft größer als die entgegengesetzte Kraft der druckmittelbetriebenen Kolben-Zylinderanordnung, so kann das Stellglied derart bewegt werden, dass die Drehlage des Koppelglieds in der Kopplungslage eingestellt wird. Ist die zweite Federkraft kleiner als die entgegengesetzte Kraft der Druck-Kolben-Zylinder-Anordnung, so kann das Stellglied derart bewegt werden, dass die Drehlage des Koppelglieds in der Entkoppellage eingestellt wird.

Der Kopplungsbereich des Aufspannmechanismus kann zur Spannachse parallele Flächennormalen aufweisende Eingriffsflächen an Zähnen einer an dem Kopplungsbereich vorgesehenen Außenverzahnung aufweisen, deren Verzahnungsachse mit der Spannachse fluchtet. Die Außenverzahnung kann zwei oder mehr Zähne aufweisen. Zum Beispiel kann die Außenverzahnung acht Zähne aufweisen. Die Eingriffsflächen dienen dem Kopplungseingriff mit dem Kopplungsgegenbereich der Palette.

Die Eingriffsflächen können als Hinterschneidungsflächen von Zahnflanken der Außenverzahnung ausgebildet sein. Dadurch kann ein besonders sicherer Kopplungseingriff mit dem Kopplungsgegenbereich der Palette erreicht werden.

Bei einer Ausführungsform können die in die Drehrichtung des Kopplungseingriffs weisenden Zahnflanken der Außenverzahnung konvex geformt sein. Dies kann ebenso den Kopplungseingriff verbessern.

Die Erfindung betrifft weiter die Aufspannvorrichtung in Kombination mit einer Palette zum Aufspannen auf einer Aufspannvorrichtung, wobei der Kopplungsgegenbereich der Palette Eingriffsflächen an Zähnen einer an dem Kopplungsgegenbereich vorgesehenen Innenverzahnung aufweist, die auf der Außenverzahnung des Aufspannmechanismus axial frei beweglich ist, bevor die Eingriffsflächen der Außenverzahnung und der Innenverzahnung drehend in ihren Kopplungseingriff gelangen, die Verzahnungsachse der Innenverzahnung im aufgespannten Zustand der Palette mit der Spannachse fluchtet und Flächennormalen der Eingriffsflächen der Innenverzahnung parallel zur Spannachse verlaufen. Somit kann ein axialfester Kopplungseingriff zwischen den Eingriffsflächen der Außenverzahnung der Aufspannvorrichtung und den Eingriffsflächen der Innenverzahnung der Palette gebildet werden. In diesem Zustand sind die Flächennormalen der Eingriffsflächen der Außenverzahnung und der Innenverzahnung parallel zur Spannachse. Alternativ könnte der Kopplungsbereich des Aufspannmechanismus als Innenverzahnung und der Kopplungsgegenbereich der Palette als Außenverzahnung ausgebildet sein.

Im Folgenden wird die Erfindung unter Bezugnahme auf die Zeichnungen beispielhaft beschrieben. In den Figuren zeigen
- Fig. 1: eine perspektivische Ansicht einer erfindungsgemäßen Aufspannvorrichtung mit einer auf eine Palettenaufnahme der Aufspannvorrichtung aufgespannten erfindungsgemäßen Palette,
- Fig. 2: eine Schnittansicht der in Fig. 1 gezeigten Aufspannvorrichtung mit der aufgespannten Palette in Richtung A-A in Fig. 1,
- Fig. 3: eine Schnittansicht der in Fig. 1 gezeigten Aufspannvorrichtung mit der aufgespannten Palette in Richtung B-B in Fig. 1,
- Fig. 4: eine Schnittansicht eines Zugglieds der in Fig. 1 gezeigten Aufspannvorrichtung,
- Fig. 5: eine perspektivische Ansicht eines Koppelglieds der in Fig. 1 gezeigten Aufspannvorrichtung,
- Fig. 6: eine Draufsicht auf das in Fig. 5 gezeigte Koppelglied,
- Fig. 7: eine perspektivische Ansicht eines Kopplungsgegenbereichs der in Fig. 1 gezeigten Palette aus einer ersten Richtung,
- Fig. 8: eine perspektivische Ansicht des in Fig. 7 gezeigten Kopplungsgegenbereichs der Palette aus einer zweiten Richtung,
- Fig. 9: eine Ansicht des in Fig. 7 gezeigten Bereichs der Palette entgegen der Spannrichtung, und
- Fig. 10: eine Schnittansicht durch die Aufspannvorrichtung und die darauf aufgespannte Palette, bei der der Kopplungsbereich und der Kopplungsgegenbereich in einem Kopplungseingriff stehen.

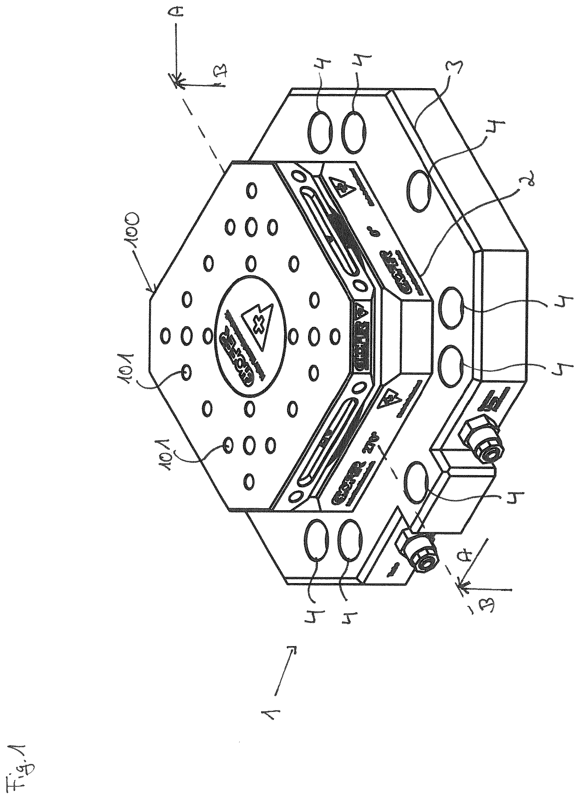

Fig. 1 zeigt eine perspektivische Ansicht einer erfindungsgemäßen Aufspannvorrichtung 1 mit einer auf eine Palettenaufnahme 2 der Aufspannvorrichtung 1 aufgespannten erfindungsgemäßen Palette 100. Die Aufspannvorrichtung 1 weist eine Grundplatte 3 zum Verbinden mit einem Träger, wie beispielsweise einem Werkzeugtisch, oder einer Maschine auf. Dazu sind in der Grundplatte 3 diese durchdringende Öffnungen 4 vorgesehen, durch welche ein Befestigungsmittel, wie beispielsweise ein Stift oder eine Schraube, hindurchgeführt werden kann. An der Palette 100 ist beispielsweise ein Werkstück oder ein Werkzeug befestigbar. Dazu sind in der Palette 100 diese durchdringende Öffnungen 101 vorgesehen (nur zwei dieser Öffnungen sind in Fig. 1 mit Bezugszeichen versehen).

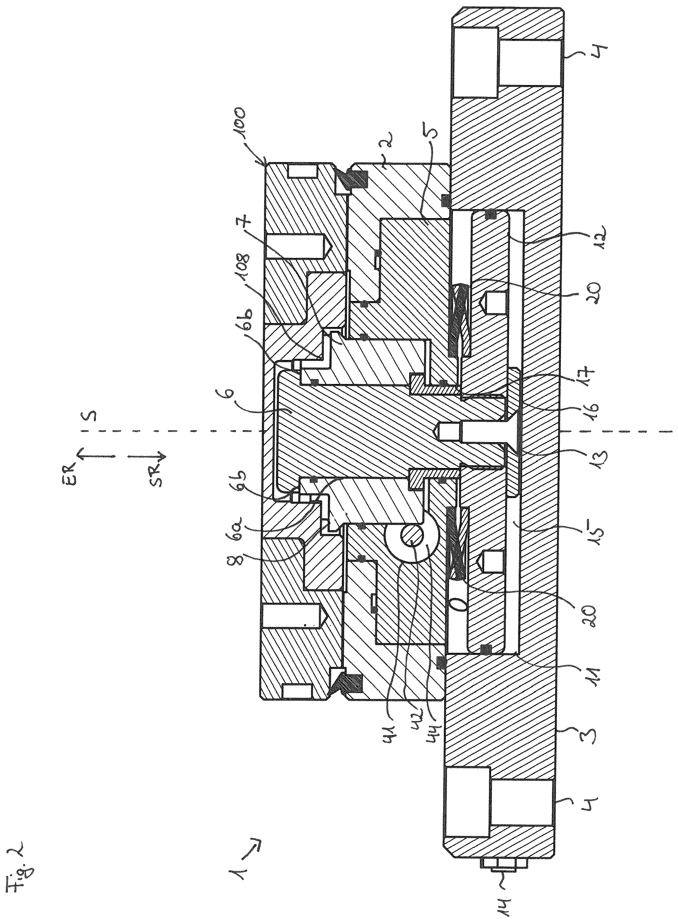

Fig. 2 zeigt eine Schnittansicht der in Fig. 1 gezeigten Aufspannvorrichtung 1 und mit der aufgespannten Palette 100 in Richtung A-A in Fig. 1. Die Aufspannvorrichtung 1 weist die mit Öffnungen 4 versehene Grundplatte 3 auf. Auf der Grundplatte 3 ist die Palettenaufnahme 2 angeordnet. Die Palettenaufnahme 2 weist einen Aufnahmebereich 5 zur Aufnahme eines Aufspannmechanismus auf.

Der Aufspannmechanismus weist ein Zugglied 6 und ein Koppelglied 7 auf. Das Zugglied 6 weist einen zylinderförmigen Bereich 6a auf, der von dem Koppelglied 7 bereichsweise konzentrisch umgeben ist. Der zylinderförmige Bereich 6a bildet eine Lagerfläche für einen zylindermantelförmigen Innenbereich des Koppelglieds 7. Dadurch ist das Koppelglied 7 um eine Spannachse S drehbar an dem Zugglied 6 gelagert.

An einem ersten Endbereich des Koppelglieds 7 ist ein Kopplungsbereich 8 zum Koppeln mit einem Kopplungsgegenbereich 108 der Palette 100 vorgesehen. Eine mögliche Ausgestaltung des Kopplungsbereichs 8 mit dem Kopplungsgegenbereich 108 wird unten beschrieben.

Die Aufspannvorrichtung 1 weist weiter ein Stellglied auf, mit dem eine Drehlage des Koppelglieds 7 einstellbar ist. Durch eine Bewegung des Stellglieds längs einer linearen Bewegungsbahn (in der gezeigten Ausführungsform entlang einer senkrecht zur Zeichnungsebene verlaufenden Richtung) ist das Koppelglied 7 um die Spannachse S drehbar. Das Stellglied wird weiter unten ausführlicher beschrieben.

Das Zugglied 6 ist längs der Spannachse S axialbeweglich. Im Folgenden wird eine von der Palette 100 in Richtung der Grundplatte 3 gerichtete Richtung als eine Spannrichtung SR bezeichnet. Eine der Spannrichtung SR entgegengesetzte Richtung wird als eine Entspannrichtung ER bezeichnet.

Das Zugglied 6 weist an einem ersten Endbereich eine radiale Schulter 6b auf, die einen Anschlag für einen ersten Endbereich des Koppelglieds 7 bildet. Dadurch ist das Koppelglied 7 Axialkraft aufnehmend an dem Zugglied 6 gelagert. Eine Bewegung des Zugglieds 6 in der Spannrichtung SR wird durch die Anlage seiner radialen Schulter an dem Koppelglied auf das Koppelglied 7 übertragen, das sich nun ebenso in der Spannrichtung SR bewegt.

Die Aufspannvorrichtung 1 weist weiter eine druckmittelbetriebene Kolben-Zylinder-Anordnung auf. Diese weist eine in der Grundplatte 3 ausgebildete Ausnehmung 11 auf, die einen Zylinder 15 für einen Kolben 12 bildet, der darin längs der Spannachse S axialbeweglich angeordnet ist. Der Kolben 12 ist mit einer Schraube 13 und einer Klemmscheibe 16 an einem dem ersten Endbereich des Zugglieds 6 entgegengesetzten Endbereich an dem Zugglied 6 befestigt. Eine Bewegung des Kolbens 12 längs der Spannachse S führt somit zu einer Bewegung des Zugglieds 6 längs der Spannachse S.

Die druckmittelbetriebene Kolben-Zylinder-Anordnung weist weiter einen Anschluss 14 auf, der ein Zuführen von Druckluft in einen zwischen dem Kolben 12 und der Grundplatte 13 angeordneten Raumbereich des Zylinders 15 ermöglicht. Dadurch kann der Kolben 12 in der Entspannrichtung ER bewegt werden. Die Klemmscheibe begrenzt die Bewegung des Kolbens 12 in der Spannrichtung SR durch Anlage an der Grundplatte 3.

An einer dem Raumbereich des Zylinders 15 entgegengesetzten Seite des Kolbens 12 greift eine erste Federanordnung 20 an. Die erste Federanordnung 20 kann beispielsweise eine Tellerfeder aufweisen, welche das Zugglied 6 konzentrisch umgibt. Durch Zufuhr von Druckluft in den Raumbereich des Zylinders 15 kann eine die Bewegung des Kolbens 12 steuernde Druckkraft auf diesen ausgeübt werden. Ist die Druckkraft kleiner als die erste Federkraft, so wird der Kolben 12 und damit das Zugglied 6 mit dem daran gelagerten Koppelglied 7 in der Spannrichtung SR bewegt. Ist die Palette 100 an dem Koppelglied 7 gekoppelt, so kann die Palette 100 auf der Palettenaufnahme 2 aufgespannt werden. Ist die Druckkraft größer als die erste Federkraft der ersten Federanordnung 20, so wird der Kolben 12 und damit das Zugglied 6 mit dem daran gelagerten Koppelglied 7 in der Entspannrichtung ER bewegt. Ist die Palette 100 an dem Koppelglied 7 gekoppelt, so kann die auf die Palette 100 wirkende Spannkraft gelöst werden.

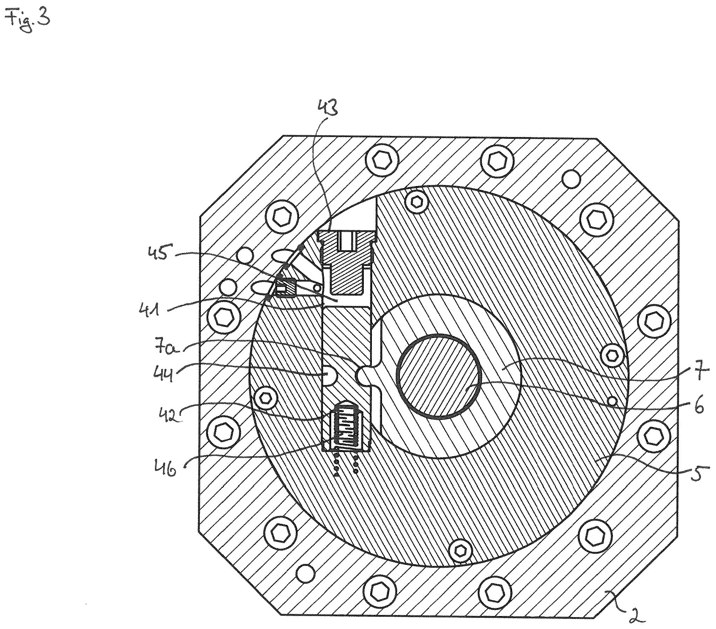

Fig. 3 ist eine Schnittansicht der in Fig. 1 gezeigten Aufspannvorrichtung 1 und der Palette 100 in Richtung B-B in Fig. 1. Das Zugglied 6 ist konzentrisch von dem Koppelglied 7 umgeben, welches in dem Aufnahmebereich 5 der Palettenaufnahme 2 angeordnet ist. Der Aufnahmebereich 5 weist weiter einen von einem Verschluss 43 verschlossenen zylinderförmigen Kanal 41 einer zweiten druckmittelbetriebene Kolben-Zylinder-Anordnung zum Führen eines Kolbens 42 auf. Druckluft kann in einen zwischen dem Verschluss 43 und dem Kolben 42 gebildeten Raum 45 über einen Zugang eingeführt werden. Dadurch wirkt eine von dem Verschluss 43 weg gerichtete Druckkraft auf den Kolben 12.

Der Kolben 42 weist eine Ausnehmung 44 auf. Ein an dem Koppelglied 7 ausgebildeter Vorsprung 7a steht in Kopplungseingriff mit der Ausnehmung 44. Ist die Palette 100 der Aufspannvorrichtung 1 zugeführt, so führt eine Bewegung des Kolbens 42 in dem zylinderförmigen Kanal 41 zu einer Drehbewegung des Koppelglieds 7 in eine Kopplungslage, in der der Kopplungsbereich 8 des Koppelglieds 7 mit dem Kopplungsgegenbereich 108 der Palette 100 gekoppelt ist. Eine Bewegung des Kolbens 42 in der Gegenrichtung führt zu einer Drehung des Koppelglieds 7 in eine Entkoppellage, in der der Kopplungsabschnitt 8 der Aufspannvorrichtung 1 und der Kopplungsgegenabschnitt 108 der Palette 100 voneinander entkoppelt sind.

Die Aufspannvorrichtung 1 weist weiter eine zweite Federanordnung 46 auf, die an dem Kolben 42 angreift. Die zweite Federanordnung 46 drängt den Kolben 42 in eine Richtung, welche eine Drehbewegung des Koppelglieds 7 im Uhrzeigersinn bewirkt. Vorzugsweise wird dadurch das Koppelglied 7 in die Kopplungslage gedrängt. Ist die auf den Kolben 42 ausgeübte Druckkraft größer als die zweite Federkraft, so wird das an den Kolben 42 gekoppelte Koppelglied 7 in die Entkoppellage gedreht. Ist die auf den Kolben 42 ausgeübte Druckkraft kleiner als die zweite Federkraft, so wird das an den Kolben 42 gekoppelte Koppelglied 7 in die Kopplungslage gedreht.

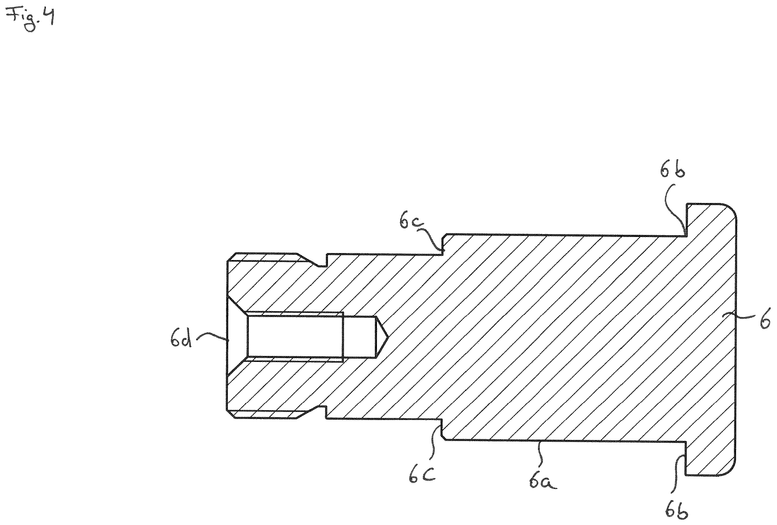

Fig. 4 ist eine Schnittansicht des Zugglieds 6 der in Fig. 1 gezeigten Aufspannvorrichtung 1. Das Zugglied 6 weist den zylinderförmigen Bereich 6a auf, der eine Lagerfläche für den zylindermantelförmigen Innenbereich des Koppelglieds 7 bildet. Weiter zeigt Fig. 4 die an dem ersten Endbereich ausgebildete radiale Schulter 6b, die einen Anschlag für den ersten Endbereich des Koppelglieds 7 bildet. Eine zweite radiale Schulter 6c bildet einen Anschlag für eine Hülse 17, die an ihrem dem ersten Endbereich des Zugglieds 6 zugewandten axialen Ende eine radiale Schulter aufweist, auf der sich das Koppelglied 7 abstützt. Dadurch ist das Koppelglied 7 zwischen dieser Schulter und der an dem ersten Endbereich ausgebildeten Schulter 6b an dem Zugglied 6 axialfest gelagert, indem die Hülse 17 an ihrem ihrer Schulter entgegengesetzten axialen Ende an dem Kolben 12 anliegt. Weiter weist das Zugglied 6 eine Schraubenaufnahme 6d für eine Schraube 13 auf.

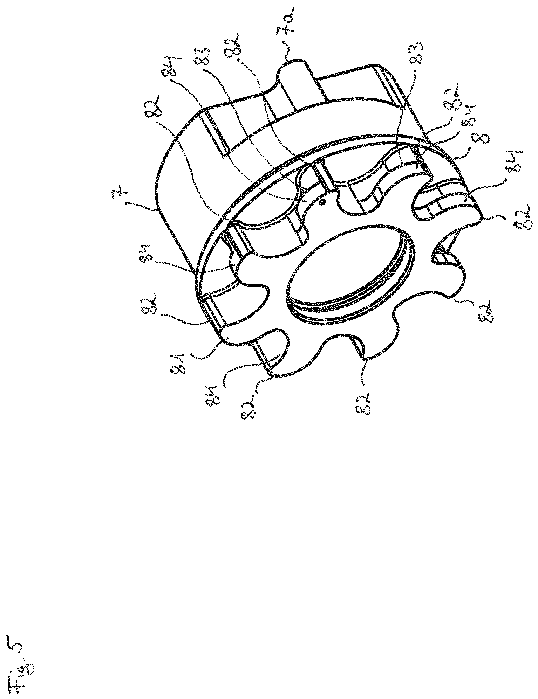

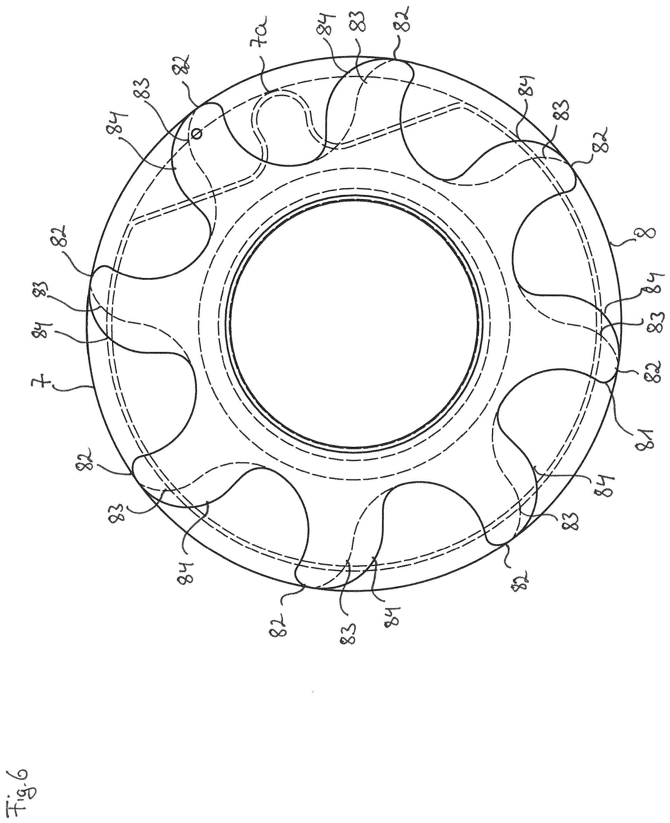

Fig. 5 ist eine perspektivische Ansicht des Koppelglieds 7 der in Fig. 1 gezeigten Aufspannvorrichtung 1, und Fig. 6 ist eine Draufsicht auf das in Fig. 5 gezeigte Koppelglied 7. Wie in Fig. 5 und Fig. 6 zu sehen ist, weist der Kopplungsbereich 8 eine Außenverzahnung 81 mit Zähnen 82 auf. Zahnflanken 84 der Zähne 83 weisen Hinterschneidungsflächen auf, welche Eingriffsflächen 83 zum Eingriff mit einem Kopplungsgegenbereich 108 der Palette 100 bilden. Wenn das Koppelglied 7 drehbar an dem Zugglied 6 gelagert ist, fluchtet die Verzahnungsachse mit der Spannachse S, und Flächennormale der Eingriffsflächen 83 verlaufen parallel zur Spannachse S. Weiter sind bei der in Fig. 5 und 6 gezeigten Ausführungsform des Kopplungsbereichs 8 die in die Drehrichtung des Kopplungseingriffs weisenden Zahnflanken 84 der Außenverzahnung 81 konvex geformt.

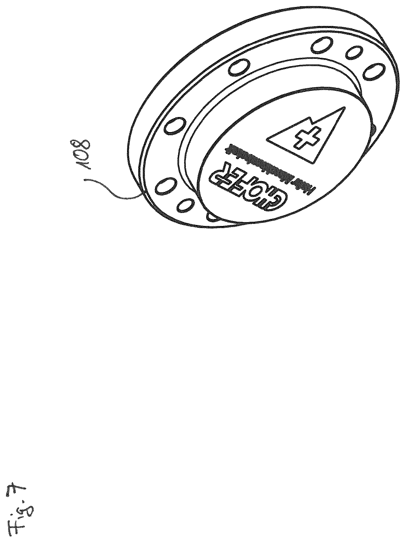

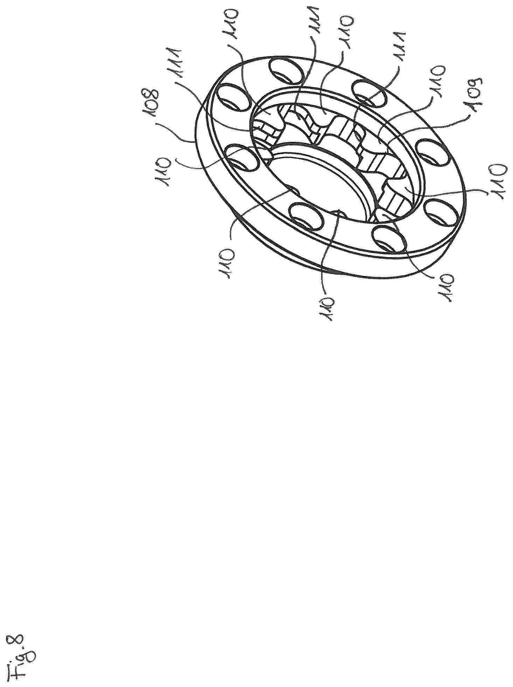

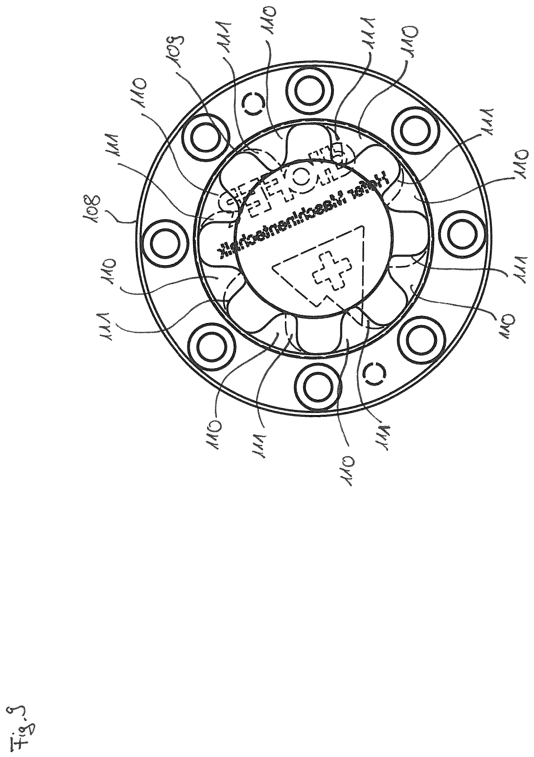

Fig. 7 ist eine perspektivische Ansicht eines Kopplungsgegenbereichs 108 der in Fig. 1 gezeigten Palette 100 aus einer ersten Richtung. Fig. 8 ist eine perspektivische Ansicht des in Fig. 7 gezeigten Kopplungsgegenbereichs 108 der Palette 100 aus einer zweiten Richtung, und Fig. 9 eine Ansicht des in Fig. 7 gezeigten Kopplungsgegenbereichs 108 der Palette 100 entgegen der Spannrichtung S.

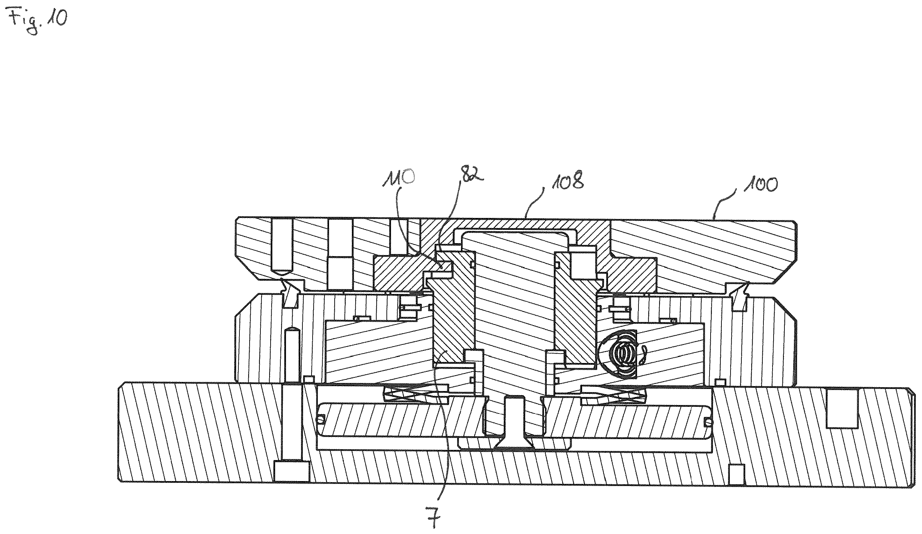

Der Kopplungsgegenbereich 108 der Palette 100 weist eine Innverzahnung 109 mit Eingriffsflächen 111 aufweisenden Zähnen 110 auf. Bevor die Eingriffsflächen 83 der Außenverzahnung 81 der Aufspannvorrichtung 1 mit den Eingriffsflächen 111 der Innenverzahnung 109 drehend in ihren Kopplungseingriff gelangen, ist die Innenverzahnung 109 auf der Außenverzahnung 83 frei beweglich. Somit kann die Palette 100 der Aufspannvorrichtung 1 zugestellt werden. Im aufgespannten Zustand der Palette 100 fluchtet die Verzahnungsachse der Innenverzahnung 109 mit der Spannachse S, und Flächennormale der Eingriffsflächen sind zur Spannachse S parallel. Eine Schnittansicht der Aufspannvorrichtung 1 mit der darauf aufgespannten Palette 100, bei der die Zähne 82 der Außenverzahnung 83 der Aufspannvorrichtung 1 mit den Zähnen 110 der Innenverzahnung 109 in einem Kopplungseingriff steht, ist in Fig. 10 gezeigt.

### Liste der Bezugszeichen

- 1: Aufspannvorrichtung
- 2: Palettenaufnahme
- 3: Grundplatte
- 4: Öffnung
- 5: Aufnahmebereich
- 6: Zugglied
- 6a: zylinderförmiger Bereich
- 6b: radiale Schulter
- 6c: zweite radiale Schulter
- 6d: Schraubenaufnahme
- 7: Koppelglied
- 7a: Vorsprung
- 8: Kopplungsbereich
- 11: Ausnehmung
- 12: Kolben
- 13: Schraube
- 14: Anschluss
- 15: Zylinder
- 16: Klemmscheibe
- 17: Hülse
- 20: erste Federanordnung
- 41: zylinderförmiger Kanal
- 42: Kolben
- 43: Verschluss
- 44: Ausnehmung
- 45: Raum
- 46: zweite Federanordnung
- 81: Außenverzahnung
- 82: Zähne
- 83: Eingriffsflächen
- 84: Zahnflanken
- 100: Palette
- 101: Öffnung
- 108: Kopplungsgegenbereich
- 109: Innenverzahnung
- 110: Zähne
- 111: Eingriffsflächen
- S: Spannachse
- SR: Spannrichtung
- ER: Entspannrichtung

## Patentansprüche

1. Aufspannvorrichtung (1) zum Aufspannen einer Palette (100) auf einer Palettenaufnahme (2) der Aufspannvorrichtung (1) mit einem Aufspannmechanismus, der zur Ausführung einer längs einer Spannachse (S) verlaufenden Spannbewegung eines axialbeweglichen Spannglieds (6) und einer um die Spannachse (S) verlaufenden Drehbewegung eines sich radial erstreckenden Kopplungsbereichs (8) des Aufspannmechanismus ausgebildet ist, wobei die Drehbewegung zum axialfesten Kopplungseingriff des Kopplungsbereichs (8) des Aufspannmechanismus mit einem Kopplungsgegenbereich (108) der Palette (100) und die Spannbewegung zum Aufspannen der angekoppelten Palette (100) auf der Palettenaufnahme (2) dient, **dadurch gekennzeichnet, dass** der Kopplungsbereich (8) des Aufspannmechanismus an einem an dem Spannglied (6) drehbar und Axialkraft aufnehmend gelagerten Koppelglied (7) ausgebildet ist.

2. Aufspannvorrichtung (1) nach Anspruch 1, **dadurch gekennzeichnet, dass** der Aufspannmechanismus eine das Spannglied (6) in Richtung der Spannbewegung mit einer ersten Federkraft beaufschlagenden erste Federanordnung (20) und eine erste druckmittelbetriebene Kolben-Zylinder-Anordnung (11, 12, 15) zum Erzeugen einer der ersten Federkraft entgegensetzten Kraft aufweist.

3. Aufspannvorrichtung (1) nach Anspruch 2, **dadurch gekennzeichnet, dass** ein Kolben (12) der druckmittelbetriebenen Kolben-Zylinder-Anordnung (11, 12, 15) an einem dem Kopplungsbereich (8) des Aufspannmechanismus entgegengesetzten Bereich des Spanngliedes (6) angeordnet ist.

4. Aufspannvorrichtung (1) nach einem der Ansprüche 2 oder 3, **dadurch gekennzeichnet, dass** die erste Federanordnung (20) eine das Spannglied (6) umgebende Tellerfeder aufweist.

5. Aufspannvorrichtung (1) nach einem der vorangehenden Ansprüche, **dadurch gekennzeichnet, dass** das Spannglied (6) einen zylindermantelförmigen Außenbereich (6a) aufweist, der eine Lagerfläche für einen zylindermantelförmigen Innenbereich des Koppelglieds (7) bildet.

6. Aufspannvorrichtung (1) nach Anspruch 5, **dadurch gekennzeichnet, dass** der Aufspannmechanismus weiter ein an einem Außenbereich (7a) des Koppelglieds (7) eingreifendes Stellglied (42) zum Einstellen einer Drehlage des Koppelglieds (7) aufweist.

7. Aufspannvorrichtung (1) nach Anspruch 6, wobei die Drehlage des Koppelglieds (7) durch eine Bewegung des Stellglieds (42) entlang einer linearen Bewegungsbahn einstellbar ist.

8. Aufspannvorrichtung (1) nach Anspruch 7, **dadurch gekennzeichnet, dass** der Aufspannmechanismus weiter eine das Stellglied (42) entlang der linearen Bewegungsbahn mit einer zweiten Federkraft beaufschlagenden zweiten Federanordnung (46) und eine zweite druckmittelbetriebene Kolben-Zylinder-Anordnung (41, 42) zum Erzeugen einer der zweiten Federkraft entgegensetzten Kraft aufweist.

9. Aufspannvorrichtung (1) nach einem der vorangehenden Ansprüche, **dadurch gekennzeichnet, dass** der Kopplungsbereich (8) des Aufspannmechanismus zur Spannachse (S) parallele Flächennormale aufweisende Eingriffsflächen (83) an Zähnen (82) einer an dem Kopplungsbereich (8) vorgesehenen Außenverzahnung (81) aufweist, deren Verzahnungsachse mit der Spannachse (S) fluchtet.

10. Aufspannvorrichtung (1) nach Anspruch 9, **dadurch gekennzeichnet, dass** die Eingriffsflächen (83) als Hinterschneidungsflächen von Zahnflanken (84) der Außenverzahnung (81) ausgebildet sind.

11. Aufspannvorrichtung (1) nach Anspruch 9 oder 10, **dadurch gekennzeichnet, dass** die in die Drehrichtung des Kopplungseingriffs weisenden Zahnflanken (84) der Außenverzahnung (81) konvex geformt sind.

12. Aufspannvorrichtung (1) nach einem der Ansprüche 9 bis 11 mit einer Palette (100) zum Aufspannen auf der Aufspannvorrichtung (1), **dadurch gekennzeichnet, dass** der Kopplungsgegenbereich (108) der Palette (100) Eingriffsflächen (111) an Zähnen (110) einer an dem Kopplungsgegenbereich (108) vorgesehenen Innenverzahnung (109) aufweist, die auf der Außenverzahnung (81) des Aufspannmechanismus axial frei beweglich ist, bevor die Eingriffsflächen (83) der Außenverzahnung (81) und der Innenverzahnung (109) drehend in ihren Kopplungseingriff gelangen, die Verzahnungsachse der Innenverzahnung (109) im aufgespannten Zustand der Palette (100) mit der Spannachse (S) fluchtet, und Flächennormale der Eingriffsflächen (111) der Innenverzahnung (109) parallel zur Spannachse (S) verlaufen.

## Claims

1. A clamping device (1) for clamping a pallet (100) on a pallet receptacle (2) of the clamping device (1), comprising a clamping mechanism formed to carry out a clamping movement of an axially movable clamping member (6) running along a clamping axis (S) and a rotational movement of a radially extending coupling region (8) of the clamping mechanism running about the clamping axis (S), wherein the rotational movement is used for the axially fixed coupling engagement of the coupling region (8) of the clamping mechanism with a coupling counter region (108) of the pallet (100), and the clamping movement is used to clamp the coupled pallet (100) on the pallet receptacle (2), **characterised in that** the coupling region (8) of the clamping mechanism is formed on a coupling member (7) which is rotatably mounted on the clamping member (6) and absorbs axial force.

2. The clamping device (1) according to claim 1, **characterised in that** the clamping mechanism has a first spring arrangement (20) which applies a first spring force to the clamping member (6) in the direction of the clamping movement, and a first pressure-medium-operated piston-cylinder arrangement (11, 12, 15) for generating a force opposing the first spring force.

3. The clamping device (1) according to claim 2, **characterised in that** a piston (12) of the pressure-medium-operated piston-cylinder arrangement (11, 12, 15) is arranged on a region of the clamping member (6) opposite the coupling region (8) of the clamping mechanism.

4. The clamping device (1) according to one of claims 2 and 3, **characterised in that** the first spring arrangement (20) has a disc spring surrounding the clamping element (6).

5. The clamping device (1) according to one of the preceding claims, **characterised in that** the clamping member (6) has a cylinder-jacket-shaped outer region (6a) which forms a bearing surface for a cylinder-jacket-shaped inner region of the coupling member (7).

6. The clamping device (1) according to claim 5, **characterised in that** the clamping mechanism further includes an actuator (42) acting on an outer region (7a) of the coupling member (7) for adjusting a rotational position of the coupling member (7).

7. The clamping device (1) according to claim 6, wherein the rotational position of the coupling member (7) is adjustable by a movement of the actuator (42) along a linear movement path.

8. The clamping device (1) according to claim 7, **characterised in that** the clamping mechanism further includes a second spring arrangement (46) which applies a second spring force to the actuator (42) along the linear movement path, and a second pressure-medium-operated piston-cylinder arrangement (41, 42) for generating a force opposing the second spring force.

9. The clamping device (1) according to one of the preceding claims, **characterised in that** the coupling region (8) of the clamping mechanism has engagement surfaces (83) having surface normals parallel to the clamping axis (S) on teeth (82) of an external toothing (81) provided on the coupling region (8) and whose toothing axis is aligned with the clamping axis (S).

10. The clamping device (1) according to claim 9, **characterised in that** the engagement surfaces (83) are designed as undercut surfaces of tooth flanks (84) of the external toothing (81).

11. The clamping device (1) according to claim 9 or 10, **characterised in that** the tooth flanks (84) of the external toothing (81) facing in the direction of rotation of the coupling engagement are convexly shaped.

12. The clamping device (1) according to one of claims 9 to 11, comprising a pallet (100) for clamping on the clamping device (1), **characterised in that** the coupling counter-region (108) of the pallet (100) has engagement surfaces (111) on teeth (110) of an internal toothing (109) which is provided on the coupling counter-region (108) and is axially freely movable on the external toothing (81) of the clamping mechanism before the engagement surfaces (83) of the external toothing (81) and of the internal toothing (109) come into rotational coupling engagement, the toothing axis of the internal toothing (109) is aligned with the clamping axis (S) in the clamped state of the pallet (100), and surface normals of the engagement surfaces (111) of the internal toothing (109) run parallel to the clamping axis (S).

## Revendications

1. Dispositif de serrage (1) pour le serrage d'une palette (100) sur un porte-palette (2) du dispositif de serrage (1), comprenant un mécanisme de serrage conçu pour permettre la réalisation, le long d'un axe de serrage (S), d'un mouvement de serrage d'un organe de serrage (6) mobile axialement, et, autour de l'axe de serrage (S), d'un mouvement de rotation d'une zone d'accouplement (8) à étendue radiale dudit mécanisme de serrage ; ledit mouvement de rotation servant à l'accouplement axialement fixe de la zone d'accouplement (8) du mécanisme de serrage avec une zone correspondante d'accouplement (108) de la palette (100), et ledit mouvement de serrage servant au serrage de la palette (100) accouplée sur le porte-palette (2) ; **caractérisé en ce que** la zone d'accouplement (8) du mécanisme de serrage est conçue sur un organe d'accouplement (7) monté rotatif sur l'organe de serrage (6) avec faculté de réception de force axiale.

2. Dispositif de serrage (1) selon la revendication 1, **caractérisé en ce que** le mécanisme de serrage présente un premier dispositif à ressort (20) qui applique une première force de ressort sur l'organe de serrage (6) dans le sens du mouvement de serrage et un premier ensemble à piston et cylindre (11, 12, 15) mû par fluide sous pression et destiné à générer une force opposée à la première force de ressort.

3. Dispositif de serrage (1) selon la revendication 2, **caractérisé en ce qu'**un piston (12) de l'ensemble à piston et cylindre (11, 12, 15) mû par fluide sous pression est disposé sur une zone de l'organe de serrage (6) qui est opposée à la zone d'accouplement (8) du mécanisme de serrage.

4. Dispositif de serrage (1) selon l'une des revendications 2 et 3, **caractérisé en ce que** le premier dispositif à ressort (20) présente une rondelle ressort entourant l'organe de serrage (6).

5. Dispositif de serrage (1) selon l'une des revendications précédentes, **caractérisé en ce que** l'organe de serrage (6) présente une zone extérieure (6a) en forme de chemise cylindrique qui forme une surface d'appui pour une zone intérieure en forme de chemise cylindrique de l'organe d'accouplement (7).

6. Dispositif de serrage (1) selon la revendication 5, **caractérisé en ce que** le mécanisme de serrage présente en outre un actionneur (42) venant au contact d'une zone extérieure (7a) de l'organe d'accouplement (7) pour ajuster une position de rotation de l'organe d'accouplement (7).

7. Dispositif de serrage (1) selon la revendication 6, dans laquelle la position de rotation de l'organe d'accouplement (7) est réglable sous l'effet d'un mouvement de l'actionneur (42) le long d'une trajectoire linéaire.

8. Dispositif de serrage (1) selon la revendication 7, **caractérisé en ce que** le mécanisme de serrage présente en outre un deuxième dispositif à ressort (46) appliquant une deuxième force de ressort sur l'actionneur (42) le long de ladite trajectoire linéaire et un deuxième ensemble à piston et cylindre (41, 42) mû par fluide sous pression et destiné à générer une force opposée à la deuxièmes force de ressort.

9. Dispositif de serrage (1) selon l'une des revendications précédentes, **caractérisé en ce que** la zone d'accouplement (8) du mécanisme de serrage présente des surfaces de contact (83) présentant des normales à la surface parallèles à l'axe de serrage (S), au niveau de dents (82) d'une denture extérieure (81) prévue sur la zone d'accouplement (8) et dont l'axe est aligné sur l'axe de serrage (S).

10. Dispositif de serrage (1) selon la revendication 9, **caractérisé en ce que** les surfaces de contact (83) sont réalisées sous la forme de surfaces en contre-dépouille de flancs de dents (84) de la denture extérieure (81).

11. Dispositif de serrage (1) selon la revendication 9 ou 10, **caractérisé en ce que** les flancs de dents (84) de la denture extérieure (81) dirigés dans le sens de rotation de l'accouplement sont de forme convexe.

12. Dispositif de serrage (1) selon l'une des revendications 9 à 11, comprenant une palette (100) destinée à être serrée sur le dispositif de serrage (1) et **caractérisé en ce que** la zone correspondante d'accouplement (108) de la palette (100) présente des surfaces de contact (111) sur les dents (110) d'une denture intérieure (109) qui est prévue sur la zone correspondante d'accouplement (108) et qui est librement mobile axialement sur la denture extérieure (81) du mécanisme de serrage avant que les surfaces de contact (83) de la denture extérieure (81) et de la denture intérieure (109) ne soient couplées avec faculté de rotation, l'axe de la denture intérieure (109) est aligné sur l'axe de serrage (S) à l'état serré de la palette (100), et les normales à la surface des surfaces de contact (111) de la denture intérieure (109) sont parallèles à l'axe de serrage (S).
